# EUROPEAN PATENT APPLICATION

(11) **EP 0 990 834 A1**
(43) Date of publication of application: **05.04.2000**
(21) Application number: 99307682.7
(22) Date of filing: 29.09.1999
(51) Int. Cl.: F16M 11/18, F16M 11/12

(54) **Camera mounting**

(30) Priority: 29.09.1998 GB 9821148
(71) Applicant: A-109 Company Limited, East Wellow, Romsey, Hampshire S051 6DP (GB)
(72) Inventor: Fallowfield, Alan John, Lymington, Hampshire SO41 8HH (GB); Willis, Martin William, Fleet, Hampshire BU13 9SN (GB)
(74) Representative: Purvis, William Michael Cameron

(57) **Abstract**

A camera mounting has a generally cylindrical first container 1 with a shaft 5 extending into the first container 1 along the longitudinal axis thereof, the shaft 5 mounting, the first container 1 for rotation about the longitudinal axis of the first container 1 and having a threaded stud 5a to be secured to a mounting bracket. A pair of arms 6 trunnion mount a spherical second container 10 to contain a camera and having a diametric band 11 including a transparent camera window 12 and generally hemispherical members 13. Electric motors are mounted in the first and second containers (1, 10) respectively to rotate the first container 1 about the shaft 5 and the spherical second container 10 about the axis of the trunnions, in each case through or almost through 360°.

## Description

The invention relates to a camera mounting.

Remote controlled cameras have wide ranging uses including security, traffic monitoring and videoing of sports and other entertainment from elevated positions.

According to the invention a camera mounting comprises a first container of generally cylindrical form, a shaft having a first end to be fixedly mounted and a second end engaged in a first end of the first container so that the first container is rotatable with respect to the shaft about the longitudinal axis of the first container, a pair of curved arms extending from a second end of the first container and a second container of generally spherical form trunnion mounted between the arms about an axis extending perpendicular to the longitudinal axis of the first container, the second container containing a camera and having a portion of its circumference transparent to form a camera window, each of the containers having an electric motor therein and the motors being effective when energised to rotate the first container with respect to the shaft and the second container about the trunnion axis to pan and tilt the camera for filming in any desired direction.

Advantageously the camera mounting is joystick controlled. The maximum rotation about the tilt axis is preferably less than 360° thereby enabling wires to be used extending between the arms and the second container rather than utilising conductive tracks and pickup brushes, but a built in slip ring is preferably used between the shaft and the first container to permit continuous rotation.

The generally spherical second container advantageously comprises a diametric band which includes the camera window and the trunnion mounts and two somewhat less than hemispherical members provided one of each side of the diametric band. The arms extending from the second end are advantageously tubular to permit passage of wires without them being exposed. All externally visible members except for the camera window are advantageously formed of aluminium alloy.

Since the camera can have a zoom feature, monitoring can be effected in all threes axes.

The camera can be of very rugged construction, can be adapted to withstand high wind loading and by the use of suitable seals on the rotation axes can be rendered substantially watertight such that it can be used in inclement conditions and even under water. It can be effectively armoured against vandal attack.

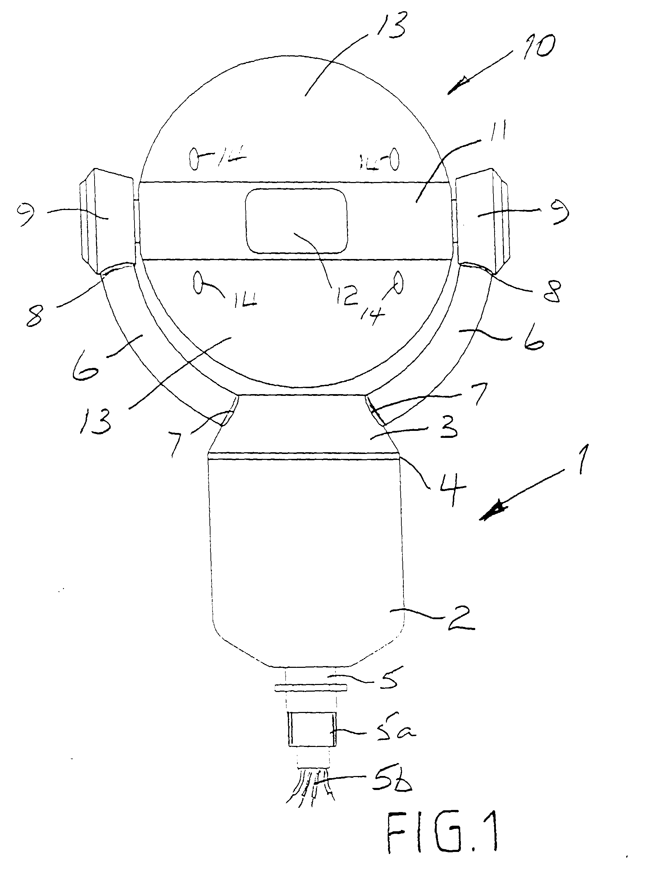

The invention is diagrammatically illustrated by way of example in the accompanying drawings in which:-
Figure 1 is an elevation of a camera mounting according to the invention: and

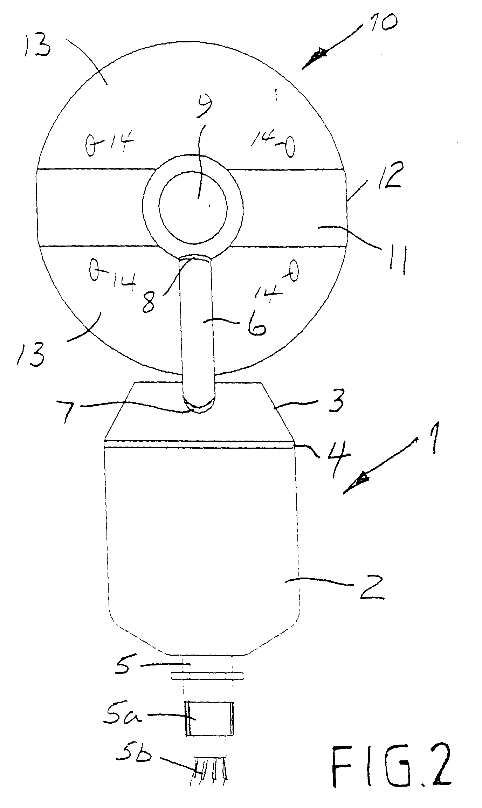

Figure 2 is a corresponding side view.

Referring to the drawing, a generally cylindrical first container 1 has a first end 2 and a second end 3 which can be separated at a joint line 4. A shaft 5 extends into the container 1 along the longitudinal axis thereof so that the shaft 5 and container 1 are relatively rotatable about the longitudinal axis of the container 1. At the outer end of the shaft 5 a threaded stud 5a is provided whereby the camera mount can be secured to a mounting bracket, mast or the like. Electrical supply and video signal transmitting wires 5b extend through the stud 5a. An electric motor is provided in the first container 1 to rotate the first container 1 relative to the shaft 5.

A pair of arms 6 extend from the second end 3, are tubular in construction and welded to the second end 3 by welds 7. At their free ends they are welded by welds 8 to housings 9 which, by means of trunnions which are not visible, mount a spherical second container 10. The second container 10 comprises a diametric band portion 11 which is engaged with the trunnions extending from the housings 9 and also includes a transparent portion 12. Identical, almost hemispherical members 13 are provided one on each opposite face of the diametric band 11 and secured by screws engaged in recesses 14 to form with the diametric band 11 the substantially spherical second container 10. A camera, which is preferably a video or digital camera, is mounted within the spherical second container 10 and can take pictures through the window 12. A further electric motor is mounted within the spherical second container 10 and can rotate the spherical container 10 about the axis of the trunnions preferably through almost 360°. If the camera, which can be remotely controlled for operation, includes a zoom feature then it can be controllable in all threes axes for pan, tilt and zoom, that is to say panning by rotation of the first container 1 with respect to the shaft 5, tilting by rotation about the axis of the trunnions between the spherical second container 10 and the housings 9 and zoom through the window 12.

The containers 1 and 10 and the arms 9 can be rugged, weatherproof, streamlined yet physically attractive to provide a versatile visually appealing and enduring housing and mount for the camera.

## Claims

1. A camera mounting comprising a first container (1) of generally cylindrical form, a shaft (5) having a first end to be fixedly mounted and a second end engaged in a first end (2) of the first container (1) so that the first container (1) is rotatable with respect to the shaft (5) about the longitudinal axis of the first container (1), a pair of curved arms (6) extending from a second end (3) of the first container and a second container (10) of generally spherical form trunnion mounted between the arms (6) about an axis extending perpendicular to the longitudinal axis of the first container (1), the second container (10) containing a camera and having a portion of its circumference transparent to form a camera window (12), each of the containers (1, 10) having an electric motor therein and the motors being effective when energised to rotate the first container (1) with respect to the shaft (5) and the second container (10) about the trunnion axis to pan and tilt the camera for filming in any desired direction.

2. A camera mounting according to Claim 1, in which the camera mounting is joystick controlled.

3. A camera mounting according to Claim 1 or Claim 2, in which the maximum rotation about the tilt axis is less than 360° thereby enabling wires to be used extending between the arms (6) and the second container (10) rather than utilising conductive tracks and pickup brushes.

4. A camera mounting according to any one of Claims 1 to 3, in which a built in slip ring is used between the shaft (5) and the first container (1) to permit continuous rotation.

5. A camera mounting according to any one of Claims 1 to 4, in which the generally spherical second container (10) comprises a diametric band (11) which includes the camera window (12) and the trunnion mounts and two somewhat less than hemispherical members (13) provided one of each side of the diametric band (11).

6. A camera mounting according to any of one Claims I to 5, in which the arms extending from the second end are tubular to permit passage of wires without them being exposed.

7. A camera mounting according to any one of Claims 1 to 6, in which all externally visible members except for the camera window (12) are formed of aluminium alloy.

8. A camera mounting according to any one of Claims 1 to 7, containing a camera having a zoom feature whereby monitoring can be effected in all three axes.

9. A camera mounting according to any one of Claims 1 to 8, able to withstand high wind loading, having suitable seals on the rotation axes so as to rendered substantially watertight such that it can be used in inclement conditions, even under water, and effectively armoured against vandal attack.
